# FASCICULE DE BREVET EUROPEEN

(11) **EP 3 584 534 B1**
(45) Date de publication et mention de la délivrance du brevet: **18.03.2026**
(21) Numéro de dépôt: 19176832.4
(22) Date de dépôt: 27.05.2019
(51) Int. Cl.: G01C 15/00, B60Q 1/04, G01M 11/06

(54) **DISPOSITIF DE MESURE DE LA PENTE D'UN SOL ET APPLICATION AU RÉGLAGE DES FEUX D'UN VÉHICULE**
MESSVORRICHTUNG DER NEIGUNG EINES BODENS, UND ANWENDUNG ZUR EINSTELLUNG DER SCHEINWERFER EINES FAHRZEUGS
DEVICE FOR MEASURING GROUND SLOPE AND APPLICATION TO ADJUSTMENT OF THE LIGHTS OF A VEHICLE

(30) Priorité: 28.05.2018 FR 1870610
(43) Date de publication de la demande: 25.12.2019
(73) Titulaire: Capelec, 34000 Montpellier (FR)
(72) Inventeur: COTON, Thierry, 34070 MONTPELLIER (FR); TEBOUL, Mickael, 94300 VINCENNES (FR); BACHER, Christian, 34730 PRADES LE LEZ (FR); PETELET, Georges, 92700 COLOMBES (FR); DUCROS, Nicolas, 34980 SAINT GELY DU FESC (FR)
(74) Mandataire: Bringer, Mathieu

(56) Documents cités:
- EP-B1- 2 534 443
- US-A1- 2007 028 470
- US-A1- 2007 044 536
- US-A1- 2017 122 735

## Description

La présente invention appartient au domaine des dispositifs de détermination de la pente des sols, et plus particulièrement à celui des appareils utilisés pour le contrôle et le réglage des équipements lumineux des véhicules automobiles routiers.

Elle a pour objet un dispositif de mesure de la pente d'un sol entre deux points distants. Elle a également pour objet un système d'assistance au contrôle de l'orientation des phares d'un véhicule pour leur réglage adéquat, mettant en oeuvre un tel dispositif.

On sait que le mauvais réglage des phares est une cause non négligeable d'accidents de la route. C'est pourquoi, les véhicules en circulation sur le réseau routier sont soumis à des obligations légales strictes en matière d'éclairage et de signalisation. Sont concernés tous les projecteurs équipant un véhicule, que ce soit les feux de croisement, les feux de route ou les feux antibrouillard.

Le critère à retenir pour le réglage des feux est la distance à laquelle le faisceau atteint le sol. Par exemple, selon les normes européennes, le projecteur doit être orienté de sorte que le faisceau ait une hauteur nulle à une distance de 50 m devant le véhicule. L'angle d'inclinaison idéal du faisceau est donc variable en fonction de la hauteur de la source lumineuse. Pour obtenir un réglage correct, il faut tenir compte de la position réelle des projecteurs par rapport au sol, qui est différente pour chaque type de véhicule, et même pour chaque véhicule en fonction de paramètres mécaniques comme l'usure, le gonflage des pneus, la charge.

Il est ainsi devenu indispensable d'effectuer des mesures quantitatives de l'angle de rabattement, c'est-à-dire de la valeur de l'inclinaison verticale du faisceau lumineux par rapport à un axe parallèle à la surface du sol sur lequel repose le véhicule.

Les centres de contrôle technique, qui sont chargés du contrôle du réglage des feux des voitures et des camions, utilisent un dispositif optique de type réglophare ou régloscope, qui est placé devant le projecteur du véhicule de manière à ce qu'il reçoive le faisceau émis. Le faisceau passe à travers une lentille qui le focalise sur un écran de projection. L'opérateur peut ainsi repérer où se situe la limite de la zone éclairée par rapport à la zone ombrée, à l'oeil nu par rapport à une graduation de l'écran de projection, ou bien à l'aide d'un dispositif de détection photosensible associé à un système de traitement automatisé du signal aboutissant à un écran d'affichage du résultat. Ceci permet d'établir si l'inclinaison du projecteur est correcte ou pas, et le cas échéant de la corriger. Pour que la mesure d'angle soit précise et fiable, il est indispensable que le réglophare et le véhicule soient correctement placés et orientés l'un par rapport à l'autre sur une surface parfaitement plane. Des textes réglementaires et normatifs décrivent en détail la procédure à suivre et les conditions requises. Ils s'imposent aux centres de contrôle technique qui doivent les respecter pour obtenir leur homologation.

Les centres de contrôle technique doivent en particulier disposer d'un emplacement dédié, dont le sol est soigneusement nivelé et aménagé. Une zone dans laquelle le réglophare peut être installé durant la mesure est délimitée par un traçage au sol et fait l'objet d'un contrôle de planéité à l'aide d'instruments - eux-mêmes vérifiés annuellement - dont la résolution est d'au moins ± 0,05%. La tolérance de planéité sur la zone de déplacement du réglophare est de ± 0,2%. Dans le cas où des équipements destinés à éliminer les défauts de planéité du sol sont utilisés, par exemple des rails ou des plaques au sol réglables, ceux-ci doivent répondre au même niveau de tolérance. Une seconde zone, dite de positionnement du véhicule, est matérialisée au sol et répond à toute une série de prescriptions. Des points de référence font l'objet d'un contrôle altimétrique régulier. La pente moyenne est calculée en vue du réglage de l'inclinaison du réglophare (étalonnage lors de la mise en service). L'écart maximal toléré par rapport à la pente moyenne est de ± 7 mm jusqu'à 3 m d'empattement, et de ± 12 mm au-delà.

Cette règlementation, qui est destinée à garantir la conformité des procédures de contrôle des véhicules et *in fine* la sécurité des voyageurs, revêt toutefois des aspects très contraignants. En effet, les professionnels doivent affecter une partie importante des surfaces au sol des ateliers au contrôle des feux et les aménager en conséquence. Ils doivent également veiller à la maintenance régulière des installations, vérifier les niveaux et gérer les carnets de suivi. Les centres contrôle technique dont c'est l'activité principale sont organisés en conséquence et ont intégré ces procédures dans leur planning.

Il n'en va pas de même pour les autres professionnels du secteur automobile, en particulier pour les garagistes et les carrossiers. Bien qu'ils aient une activité d'entretien et de réparation des véhicules qui s'étend à la vérification des paramètres de fonctionnement, les ateliers de réparation sont très limités, voire dans l'impossibilité de réaliser des mesures d'inclinaison des feux dans les conditions spécifiées par la règlementation, car ils ne disposent pas d'une installation dédiée, généralement par manque de place.

Les réglages sont en pratique réalisés à l'emplacement où la réparation a été faite, en déplaçant un appareil, réglophare ou autre, jusqu'au véhicule. On comprend que dans ces conditions, les résultats fournis risquent d'être entachés d'erreur selon la déclivité du sol et la régularité du revêtement. Or, il existe un souhait de plus en plus sensible chez les conducteurs, de bénéficier d'un service complet d'entretien de leur véhicule et d'une plus grande sécurité au volant. Dans ce contexte, les professionnels souhaitent pouvoir réaliser le diagnostic d'un défaut d'éclairage à l'occasion d'une intervention sur le véhicule, surtout si elle est susceptible de modifier l'orientation des feux. Il existe donc un besoin de disposer d'un équipement qui puisse être utilisé instantanément en tout point de leur atelier, pour fournir sur le champ des indications fiables et nécessaires au réglage des feux d'un véhicule avec un degré de précision élevé.

Pour répondre à ce besoin, la demanderesse a conçu un dispositif permettant de déterminer la déclivité d'une surface entre deux points, et notamment du sol sur lequel repose un véhicule à contrôler pour prendre en compte cette déclivité dans le diagnostic du réglage des feux. Ce dispositif est avantageusement conçu pour fonctionner en interaction avec un appareil de contrôle des feux tel qu'un réglophare.

Dans le cadre du réglage des feux des véhicules, il est connu de s'assurer du bon positionnement du réglophare à l'aide d'un niveau à bulle ou d'un inclinomètre. Par exemple, US 8605269 décrit un appareil de réglage des feux du type réglophare, qui est installé sur des rails. Le niveau de l'appareil est vérifié à l'aide d'un inclinomètre et/ou un accéléromètre fixé sur une face du boîtier, permettant de calculer la pente du sol à l'aplomb du réglophare. La pente de la zone où les véhicules sont placés peut quant à elle être mesurée à l'aide d'un appareil comprenant un niveau optique et une cible qu'on pose sur le sol. L'opérateur centre le niveau à bulle à l'aide d'une molette et relève la graduation atteinte. Cet appareil n'est conçu que pour étalonner un réglophare par rapport à une zone de contrôle donnée préétablie. Il ne répond pas aux besoins exprimés ci-dessus.

US 2007/044536 A1 divulgue un système d'arpentage avec station totale émettant un laser de référence et un suiveur (pôle) dans lequel l'élévation/déclinaison relative entre les points où se trouvent la station et le pôle, c'est-à-dire la pente du sol entre ces deux points, est déterminée.

US 2007/028470 A1 divulgue un châssis contient un module laser et un capteur d'inclinaison, dans lequel l'inclinomètre/accéléromètre détecte l'orientation spatiale du châssis.

L'objectif premier de la présente invention est donc de fournir un dispositif remédiant aux inconvénients ci-dessus exposés, capable de réaliser à la demande et en divers lieux une mesure de l'inclinaison du sol. Un objectif particulier de l'invention est de pouvoir réaliser cette mesure sur le sol d'un atelier recevant des véhicules. Un objectif de l'invention est également de délivrer une mesure de la pente d'un sol pour faciliter le réglage des feux d'un véhicule. Un autre objectif de l'invention est d'atteindre et de garantir un haut degré de précision au regard des normes en la matière. Un autre objectif de l'invention est de fournir aux professionnels un outil universel adapté à tous les types de véhicules, légers ou lourds, quel qu'en soit le modèle. Un autre objectif de l'invention est de transmettre le résultat de la déclivité à une unité centrale programmée pour intégrer cette donnée automatiquement dans le diagnostic d'orientation des feux. Encore un objectif de l'invention est de disposer d'un outil léger, facile à installer, compact et robuste.

Le dispositif de mesure de l'inclinaison du sol selon la présente invention répond à ces exigences. Il est composé de deux unités pouvant être placées à distance l'une de l'autre, la première émettant un rayon lumineux, par exemple un faisceau laser, la seconde jouant le rôle de cible pour recevoir ledit faisceau. Un accéléromètre associé à la première unité permet de déterminer la déclivité du sol entre les deux unités. Un tel dispositif est de par sa fonction un inclinomètre. Lorsque les deux unités constitutives du dispositif sont placées à proximités des roues d'un véhicule, on mesure la déclivité du sol supportant le véhicule : le dispositif est ainsi particulièrement adapté à la mesure de la pente lors du contrôle des feux d'un véhicule, à l'aide d'un appareil réglophare ou autre. On comprend cependant que le dispositif objet de l'invention a vocation à de multiples applications, car étant indépendant, il est d'emploi universel : il peut être utilisé dans toute une série de situations où la pente du sol doit être prise en compte.

Ainsi, l'invention a pour premier objet un dispositif de mesure de la pente d'un sol entre deux emplacements E1 et E2 distants l'un de l'autre, comprenant deux unités structurellement distinctes destinées à être posées au sol, à savoir une première unité comprenant :
- un premier socle s'étendant dans un plan P1, apte à reposer sur le sol à l'emplacement E1,
- ledit premier socle étant associé à un support portant un boitier de mesure, dans lequel sont montés fixes i) des moyens d'émission d'un faisceau lumineux d'axe A à travers un orifice ménagé dans la paroi antérieure dudit boîtier, et ii) un accéléromètre apte à générer un signal électrique proportionnel à sa propre inclinaison par rapport à une position de référence Pr,
et une seconde unité comprenant :
- un second socle s'étendant dans un plan P2, apte à reposer sur le sol à l'emplacement E2,
- ledit second socle portant une platine cible dont une face est dotée d'une mire située à une hauteur H2 définie dudit second socle, ledit socle et ladite platine cible s'étendant dans des plans sensiblement perpendiculaires entre eux,

le boitier de mesure étant monté articulé sur le support par des moyens de jonction autorisant un pivotement de l'axe A autour d'un point O situé à une hauteur H1 définie dudit premier socle, dans un plan Po orthogonal au plan P1 jusqu'à une inclinaison If telle que ledit faisceau lumineux pointe vers la mire lorsque les deux unités sont posées respectivement aux emplacements E1 et E2,
l'accéléromètre étant conformé pour subir ledit pivotement et délivrer un signal électrique représentatif de l'inclinaison If de l'axe A par rapport au plan P1, ledit accéléromètre étant relié à des moyens de traitement du signal et de calcul configurés pour fournir une mesure quantitative de la pente entre les emplacements E1 et E2 à partir de l'inclinaison If du faisceau lumineux pointant sur la mire.

Chaque unité du dispositif comprend un socle constituant une base destinée à reposer sur le sol en deux emplacements E1 et E2 distants, c'est-à-dire éloignés l'un de l'autre, par exemple de quelques dizaines de centimètres à plusieurs mètres, voire quelques dizaines de mètres, dans la limite de la puissance d'éclairage du faisceau lumineux émis par les moyens d'émission. Les socles sont en contact avec le sol par leur face inférieure définissant les plans P1 et P2 qui correspondent au niveau du sol aux emplacements E1 ou E2, respectivement. La pente du sol que l'on mesure correspond à la différence de niveau entre les plans P1 et P2, les variations locales du relief du sol entre les deux emplacements étant sans influence sur la mesure de la pente entre E1 et E2.

Par "sol", on entend toute surface susceptible de supporter un objet, dont la déclivité doit être mesurée ou contrôlée. Le sol peut être fait d'un matériau quelconque, notamment en ciment, goudron, revêtu de carrelage, de bois, ou autre revêtement synthétique rigide ou souple. Il peut être dans un bâtiment tel qu'un atelier de mécanique, dans une habitation. Par extension, il pourra s'agit aussi d'un équipement tel d'une plateforme, du mobilier, ou autre dont le niveau doit être connu. La description du dispositif qui va suivre montrera son caractère universel, au-delà des utilisations spécifiquement illustrées.

Le boîtier de mesure est l'organe actif du dispositif. Il se présente sous la forme d'un corps formé de parois rigides délimitant un espace qui renferme notamment des moyens d'émission d'un faisceau lumineux et un accéléromètre relié à des moyens de traitement du signal généré par ce dernier. Les moyens d'émission et l'accéléromètre sont maintenus fixes dans le boitier, de sorte qu'une manoeuvre appliquée au boitier entraine un déplacement identique de ceux-ci. Une paroi du boitier comporte un orifice par lequel le faisceau lumineux est émis, cette paroi étant définie par convention comme la paroi antérieure. L'orientation du faisceau lumineux est caractérisée par son axe A.

L'accéléromètre est un capteur qui génère un signal électrique en fonction de sa propre inclinaison. Il s'agit ici d'un composant électronique qui est intégré dans le boitier de mesure. À noter que, pour éviter toute ambiguïté, le terme "inclinomètre" sera réservé dans la suite de cet exposé au dispositif de mesure de la pente dans son ensemble, tandis que le capteur d'inclinaison sera appelé "accéléromètre".

La seconde unité du dispositif selon l'invention comprend une platine, dite platine cible, s'étendant dans un plan sensiblement perpendiculaire au second socle. La platine cible présente ainsi une surface sensiblement perpendiculaire par rapport au sol, qui peut être atteinte par le faisceau lumineux lorsqu'elle est placée face à la première unité, dans l'axe du faisceau lumineux. Elle porte un repère ou mire placée à une hauteur H2 définie (fixe et connue) du second socle, qui va servir de point de visée, c'est-à-dire sur lequel le faisceau lumineux va pointer pour réaliser la mesure de la pente. Par définition, la mire est une cible qui reste fixe et vers laquelle un dispositif servant à ajuster la visée doit être orienté, en l'occurrence ici le dispositif d'émission du faisceau lumineux. La platine cible peut être associée à son socle par tout moyen, et peut être strictement ou sensiblement perpendiculaire à celui-ci à condition de présenter une face érigée capable de recevoir le faisceau lumineux.

Dans la première unité du dispositif selon l'invention, le boitier de mesure est monté articulé sur un support lié au premier socle. La liaison entre le support et le boitier de mesure est assurée par des moyens de jonction réalisant une articulation telle que l'orientation de l'axe A du faisceau lumineux peut être modifiée par un pivotement dans un plan Po orthogonal au plan P1 du premier socle, à l'exclusion de tout autre mouvement. Le point de pivotement de l'axe A, appelé point O, est situé à une hauteur H1 définie (fixe et connue) du premier socle. Il est entendu en outre que l'orientation de l'axe du faisceau une fois modifiée, elle se maintient tant qu'une nouvelle orientation ne lui est pas imposée. Le support et le premier socle peuvent quant à eux être unis par tous moyens dans une position fixe ou mobile, à condition de concourir à la mobilité du faisceau lumineux dans le plan Po uniquement (ou de ne pas la gêner). Le pivotement du faisceau implique que l'axe A du faisceau peut tourner autour du point O pour être orienté de façon à frapper la platine cible en des points de hauteur différente, et notamment au niveau de la mire pour effectuer la mesure de pente.

C'est pourquoi, selon un mode de réalisation préféré, les moyens de jonction entre le boitier de mesure et le support de la première unité présentent un axe de rotation R sécant de l'axe A au point O et parallèle au plan P1 du premier socle, lequel axe de rotation R est avantageusement situé à la hauteur H1 du plan P1 du premier socle, qui est identique à la hauteur H2 de la mire par rapport au second socle. De la sorte, l'axe A est parallèle au sol entre les deux unités lorsque le faisceau est réglé sur la mire. L'accéléromètre génère alors un signal proportionnel à l'inclinaison du faisceau lumineux par rapport à sa position de référence Pr. À noter que dans le cas où H1 et H2 sont différents, le signal électrique délivré par l'accéléromètre est représentatif de l'inclinaison If sans être strictement proportionnel à celle-ci, de sorte que les hauteurs H1 et H2 doivent être prises en compte spécifiquement par les moyens de calcul pour obtenir la mesure quantitative de la pente.

Comme indiqué plus haut, l'accéléromètre est monté fixe dans le boîtier. Il peut être configuré de sorte que son inclinaison est nulle lorsque le faisceau lumineux est horizontal. La position de référence Pr de l'accéléromètre est alors horizontale. C'est la plus simple à mettre en oeuvre, notamment lors de la calibration qui se fait généralement en usine.

Les moyens d'émission peuvent être choisis parmi ceux à la disposition de l'homme de l'art. Les émetteurs laser conviennent parfaitement et existent en différentes longueurs d'onde et puissances. Par exemple, on peut utiliser un pointeur laser de classe 2M selon la nomenclature de la Commission électrotechnique internationale (CEI), dont la puissance de sortie ne peut pas entraîner de lésions oculaires. On comprend qu'il est fixé dans le boitier de manière que le faisceau lumineux ait un axe passant par le point O et l'orifice antérieur du boitier. Ce pointeur doit être dimensionné de manière à émettre un faisceau créant un contraste net, visible à l'oeil nu quand il frappe la platine cible. Son diamètre est déterminé par la configuration de sortie du pointeur et limité par la taille de l'orifice de sortie du boitier de mesure. Ainsi, de préférence, les moyens d'émission comprennent un pointeur à diode laser apte à projeter à travers l'orifice du boitier un faisceau lumineux ayant moins de 5 mm de diamètre à une distance de 5 m. Pour une meilleure précision, le faisceau a un diamètre compris entre 1 mm et 3 mm. Ainsi, le faisceau forme une tache lumineuse fine et nette sur la platine cible lorsque celle-ci est placée à la distance voulue.

Conformément à une caractéristique préférée du dispositif selon la présente invention, le premier socle et le support sont formés de deux plaques en métal liées perpendiculairement l'une à l'autre par une de leurs bordures, la plaque support comportant un percement apte à coopérer avec les moyens de jonction du boitier de mesure. De la sorte, le support s'étend dans un plan perpendiculaire à l'axe de rotation R des moyens de jonction et au plan P1 du premier socle. Le percement prévu pour recevoir les moyens de jonction avec le boitier est avantageusement centré à la hauteur H1, pour faciliter la fixation des moyens de jonction présentant un axe de rotation R à cette hauteur H1. L'ensemble socle-support adopte ainsi un profil très simple en L, le boitier de mesure étant fixé sur la face avant, c'est-à-dire de sorte que le centre de gravité de l'ensemble surplombe la base du L, assurant ainsi une bonne stabilité de l'unité posée au sol. Les deux plaques peuvent être de tailles identiques ou différentes, par exemple de 15 cm à 20 cm de côté.

Comme déjà indiqué, le boitier de mesure se présente sous la forme d'un corps formé de parois rigides. Selon un mode de réalisation particulier de l'invention, il comprend une coque creuse dotée d'un fond plan parallèle à la plaque support, et un couvercle, la coque et le couvercle définissant un compartiment de forme allongée selon un axe longitudinal confondu avec l'axe A, le fond de la coque comportant une couronne s'étendant extérieurement selon un axe confondu avec l'axe de rotation R, dans laquelle sont ménagés des moyens de fixation de la coque du boitier à la plaque support, la lisière libre de la couronne formant une surface d'appui contre la plaque support.

La lisière de la couronne est commodément circulaire, au sens où elle est fermée sur elle-même sans forcément être inscrite dans un cercle. Elle est centrée sur l'axe R et à distance du percement, c'est-à-dire éloignée de la bordure de celui-ci par exemple de 0,5 cm à 1,5 cm de façon à créer une résistance élevée aux efforts latéraux susceptibles de s'exercer sur le boitier de mesure. Cette disposition contribue à empêcher des mouvements de l'axe du faisceau lumineux autres que la rotation autour de l'axe R, en particulier lorsqu'un opérateur agit sur le boitier de mesure pour régler l'inclinaison du faisceau vers la mire, l'orientation du boitier conditionnant l'inclinaison de l'accéléromètre et partant, la précision de la mesure.

Le boitier peut être réalisé en deux parties, facilitant l'assemblage du dispositif. En effet, le fond de la coque creuse étant accessible par l'intérieur, celle-ci peut être montée sur le support, puis garnie de ses composants avant d'être close par le couvercle qui sera maintenu par tout moyen commode et robuste à la coque creuse, par exemple par vissage, thermo-soudure ou clipsage. La couronne prolongeant vers l'extérieur du boitier le fond de la coque selon l'axe R peut renfermer les moyens de fixation de la base du boitier à la plaque support qui sont avantageusement eux-mêmes agencés selon l'axe R de ladite couronne, de manière à autoriser la rotation de l'axe A du faisceau lumineux quand le boîtier est manipulé. Dans cette optique, les moyens de fixation sont conçus pour fixer le boitier tout en permettant sa rotation par rapport à l'axe R.

Selon un mode de réalisation préféré de l'invention, les moyens de fixation comportent une vis dotée d'une tige filetée et d'une tête polygonale, et un fourreau coaxial de la couronne, apte à recevoir la tige filetée de la vis, ledit fourreau ayant un orifice externe délimité par une bordure circulaire apte à prendre appui à la périphérie du percement de la plaque support, la tige de la vis traversant ledit orifice et ledit percement pour recevoir un écrou de fixation muni d'un élément de freinage, et un orifice interne débouchant dans un logement ménagé dans le fond de la coque apte à recevoir la tête de ladite vis, le logement et la tête de vis ayant une section polygonale identique. Le logement et la tête de la vis sont identiques par leur dimension et par leur forme, par exemple hexagonale, de manière qu'ils sont mus solidairement lors d'un déplacement du boitier. La bordure de l'orifice externe du fourreau prend appui sur la plaque du support, autour du percement et à proximité immédiate de celui-ci, et réalise ainsi une butée contre ladite plaque. Avec la lisière libre de la couronne qui prend appui à distance du percement, ce sont ainsi deux surfaces d'appui circulaires concentriques qui assurent la stabilité latérale (ou radiale) du boitier de mesure. En outre, le diamètre du fourreau est identique au diamètre de la vis (à la pointe du filet), ce qui limite le jeu et ajoute à la stabilité du montage.

Selon un mode de réalisation, le fourreau peut être solidarisé à la couronne par une paroi transversale formant épaulement au niveau de l'orifice interne, ledit épaulement réalisant une butée axiale de la tête de vis lorsque l'écrou est serré. Lorsque l'écrou est serré sur la tige filetée, il bute contre la face arrière de la plaque, tandis que la tête de la vis maintient l'ensemble de la couronne et du fourreau en appui contre l'avant de la plaque, assurant ainsi le serrage de part et d'autre de cette dernière.

Selon un exemple de réalisation de l'invention, la bordure du fourreau est prolongée par un embout circulaire s'étendant sur une longueur égale à l'épaisseur de la plaque, ayant un diamètre interne identique au diamètre du fourreau et un diamètre externe, inférieur à celui du fourreau, qui est égal au diamètre du percement de la plaque, de sorte que l'embout s'insère par ajustement glissant dans le percement de la plaque et qu'il réalise un guide de centrage de la vis pour son assemblage sur la plaque support. La surface d'appui en est accrue, ce qui limite l'effort de serrage. La partie de la bordure circulaire de l'orifice du fourreau qui ne porte pas l'embout forme un épaulement à apte à prendre appui à la périphérie du percement de la plaque en réalisant la butée axiale du fourreau contre la plaque, comme vu précédemment. On a ainsi un assemblage stable avec serrage juste suffisant pour autoriser la rotation du boitier seulement sous l'effet d'une pression exogène (appliquée normalement par l'opérateur).

Pour compléter l'ensemble, la vis est avantageusement associée avec un écrou freiné afin d'éviter un desserrage accidentel du fait des manipulations répétées et des vibrations. Ainsi, de préférence, l'écrou coopérant avec la vis est muni d'un élément de freinage, par exemple une bague en nylon sertie, une rondelle élastique, une goupille, un contre-écrou, ou autre.

Le corollaire de ces caractéristiques combinées est que les éléments de fixation entre le support et le boitier sont précisément dimensionnés et ajustés, pour réaliser une jonction rigide, parfaitement orthogonale à la plaque support et finalement parallèle au plan du sol, y compris durant la rotation du boitier de mesure. La rotation de l'axe A du faisceau ne peut être obtenue que dans un plan Po perpendiculaire au plan P1 du premier socle, par application un effort extérieur. Aucun système de verrouillage n'est ainsi nécessaire. On souligne en outre que le mode de réalisation décrit ci-dessus permet une rotation à 180° du boitier. De ce fait, de manière particulièrement intéressante, l'emploi du dispositif selon l'invention est aussi commode d'un côté que de l'autre, par exemple à droite et à gauche d'un véhicule.

Le dispositif objet de la présente invention est également conçu pour être manipulé, rangé, installé de manière simple, commode et peu encombrante. Dans un mode de réalisation intéressant, la plaque support comporte une découpe centrée sur le percement recevant les moyens de jonction avec le boitier, la découpe étant infléchie pour former une patte s'étendant au-dessus du socle, dans un plan parallèle au plan de la plaque support, à une distance au moins égale à la hauteur de l'écrou de fixation du boitier de mesure. De ce fait, la plaque support ne comporte aucune aspérité saillante sur sa face arrière.

Il est intéressant que le second socle et la platine cible de la seconde unité soient formés, comme la première unité, de deux plaques métalliques adoptant un profil en L, de tailles identiques ou différentes, par exemple de 15 cm à 20 cm de côté. Il sera alors aisé d'empiler les deux unités pour les ranger ensemble sans perte de place. La mire peut aussi de préférence être réalisée sans créer d'aspérité à la surface de la platine cible. C'est pourquoi, selon l'invention, le second socle et la platine cible de la seconde unité peuvent avantageusement être formés de deux plaques en métal liées l'une à l'autre par une de leurs bordures selon une orientation perpendiculaire, la platine cible comportant la mire matérialisée par un point ou une bande rectiligne continue ou discontinue, et située de préférence à la hauteur H2 comme exposé plus haut.

Selon l'invention, la mire a été conçue pour qu'un opérateur puisse visualiser facilement si l'orientation du faisceau lumineux est correcte ou pas, afin de la corriger d'un simple geste. C'est pourquoi la mire de la platine cible peut être constituée d'une bande rectiligne mince par exemple de moins de 5 mm, parallèle au plan P2 du second socle, réalisée par tout moyen permettant d'obtenir un contraste net et durable. Il est en particulier recommandé qu'elle résiste à l'usure, ce d'autant plus si les deux unités sont rangées emboitées. La mire peut ainsi être une bande ou autre motif longiligne, obtenue par impression (par exemple par sérigraphie), par gravure (qu'elle soit mécanique, chimique ou laser), ou encore par perforation ou évidement continu ou discontinu du métal.

De préférence, la mire de la platine cible sera constituée par une bande évidée continue dont la longueur occupe au moins 50% et jusqu'à 90% de la largeur de la platine, pratiquée à la hauteur H2 comme déjà vu. Lorsque l'opérateur règle l'inclinaison du faisceau, il voit le halo lumineux sur la platine tant que celui-ci ne pointe pas exactement sur la mire. Quand le réglage est abouti, le faisceau passe à travers la bande évidée. Il devient peu ou pas visible. Lors de la réalisation des essais, il est apparu intéressant que la tache lumineuse soit plus étendue que la hauteur de la bande évidée, car dans ce cas, la partie la plus lumineuse du faisceau disparait à travers la bande mais la périphérie du halo l'impacte de part et d'autre. L'opérateur peut ainsi s'assurer aisément du centrage précis du faisceau. C'est pourquoi, la bande évidée a de manière préférée une largeur de 1 mm à 3 mm. Comme exposé précédemment, le faisceau émis est tel qu'il forme une tache lumineuse fine et nette sur la platine cible lorsque celle-ci est placée à la distance voulue. La taille relativement élevée de la platine, par exemple avec 15 à 20 cm de côté, permet à l'opérateur un premier placement au sol des deux unités du dispositif l'une par rapport à l'autre, avec une orientation grossière du faisceau lumineux pour qu'il coupe la platine cible en un point quelconque. On entend par placement, la position relative des unités alors qu'elles sont posées aux emplacements E1 et E2 entre lesquels la déclivité doit être mesurée. L'opérateur peut ensuite ajuster le placement relatif des première et seconde unités face à face, et procéder à un réglage fin de l'orientation du faisceau par la manoeuvre du boitier de mesure. Le dispositif est alors prêt à effectuer la mesure de pente.

Par ailleurs, de manière intéressante, les plaques des première et seconde unités peuvent avoir des dimensions similaires (en longueur et en largeur), la plaque support et la plaque cible comportant chacune un trou oblong à proximité de leur bordure supérieure faisant office de poignée de préhension. Cette disposition complète l'agencement du dispositif pour faciliter sa préhension et réduire les risques de chute.

Selon une autre caractéristique préférée du dispositif objet de l'invention, les premier et second socles sont revêtus sur leur face inférieure, d'une couche d'un matériau souple, apte à se déformer au contact d'aspérités du sol ou de fragments de matière. Un tel matériau peut être une mousse synthétique ayant une face adhésive pour son maintien aux socles, d'épaisseur comprise par exemple entre 3 mm et 7 mm lorsqu'elle n'est soumise à aucune contrainte, mais pouvant être réduite de moitié ou davantage par écrasement local lorsque du sable, des copeaux ou des amas divers susceptibles de se répandre sur le sol se trouvent recouverts par le socle. Les petites irrégularités du sol, les défauts de revêtement ou les saletés se trouvant dans un atelier de mécanique ou tout autre lieu, sont ainsi neutralisées et les plans P1 et P2 des deux socles ont un niveau exactement représentatif de celui du sol aux emplacements E1 et E2, sans inclinaison trompeuse.

Lorsque les unités du dispositif selon l'invention sont placées et que le faisceau pointe vers la mire comme expliqué ci-dessus, l'accéléromètre assujetti au boitier subit l'inclinaison If par rapport au plan P1, et délivre un signal électrique représentatif de cette inclinaison. La mesure peut être réalisée grâce aux moyens de traitement du signal et de calcul auxquels l'accéléromètre est relié. L'ensemble est configuré pour prendre en charge le signal généré par l'accéléromètre et fournir une mesure quantitative de la pente entre les emplacements E1 et E2 à partir de l'inclinaison If du faisceau lumineux. Le résultat de la mesure peut ensuite être utilisé par un appareil nécessitant la prise en compte de la déclivité du sol. Pour ce faire, selon une caractéristique du dispositif objet de l'invention, celui-ci comprend un module électronique de communication sans fil avec une unité centrale, des moyens d'enregistrement, de stockage et d'édition des résultats de mesures, ainsi qu'une alimentation électrique autonome. Quand le dispositif objet de l'invention est utilisé dans un atelier de mécanique automobile ou similaire effectuant des réparations ou le réglage des projecteurs des véhicules, ladite unité centrale peut-être l'unité centrale d'un appareil de contrôle de l'orientation des feux d'un véhicule.

Comme expliqué précédemment, le dispositif objet de l'invention a une portée universelle et peut être mis en œuvre à des fins variées. Il peut ainsi être mis en œuvre dans un procédé de mesure de la pente d'un sol quelconque entre deux emplacements E1 et E2 distants l'un de l'autre, cette mesure étant recherchée comme une finalité en elle-même ou comme élément d'un système plus complexe. Ce procédé comprend les étapes consistant à :
- placer les socles des deux unités d'un dispositif de mesure de la pente d'un sol tel que décrit précédemment aux emplacements E1 et E2,
- faire pivoter le boitier de mesure dans un plan Po orthogonal au plan P1 du premier socle jusqu'à ce que le faisceau lumineux émis par les moyens d'émission pointe vers la mire,
- enregistrer le signal électrique représentatif de l'inclinaison If atteinte par le faisceau, que fournit l'accéléromètre,
- calculer la pente entre les emplacements E1 et E2 à partir de l'inclinaison If du faisceau lumineux.

Le dispositif qui vient d'être décrit est particulièrement adapté pour fonctionner en association avec un appareil pour le contrôle de l'orientation du faisceau lumineux émis par les projecteurs d'un véhicule, dit réglophare, l'ensemble formant un système de contrôle et d'aide au réglage de l'orientation des feux des véhicules. En effet, les emplacements E1 et E2 peuvent être choisis jouxtant respectivement une zone Z1 sur laquelle repose une roue avant d'un véhicule et une zone Z2 sur laquelle repose une roue arrière dudit véhicule, pour fournir une mesure précise de la pente du sol sous ledit véhicule, laquelle pourra être prise en compte pour apprécier le réglage correct ou pas des feux du véhicule. Il est apparu en effet à l'issu des tests réalisés en situation, que le dispositif objet de l'invention offre une grande fiabilité et une haute précision. En effet, l'erreur maximale observée sur la mesure de pente s'élève à 0,4%, alors que la méthode actuellement préconisée en contrôle technique sur des installations dédiées), tolère des valeurs bien supérieures, situées entre 0,50% et 0,70% selon l'empattement des véhicules.

Ainsi, un autre objet de la présente invention concerne un système de contrôle et d'aide au réglage de l'orientation des feux d'un véhicule dont les roues reposent sur le sol d'un atelier, une roue avant reposant sur une zone Z1 et une roue arrière reposant sur une zone Z2 dudit sol, le système comprenant :
- un dispositif de mesure de la pente du sol entre deux emplacements E1 et E2, selon l'invention,
- un appareil de contrôle de l'orientation du faisceau des feux émis par un véhicule, apte à mesurer l'angle formé par ledit faisceau avec le plan du sol,
- des moyens de calcul fournissant une mesure quantitative de la pente du sol entre les emplacements E1 et E2, choisis de sorte qu'ils jouxtent respectivement les zones Z1 et Z2,
- des moyens de calcul fournissant une valeur quantitative de l'angle de rabattement du faisceau des feux, c'est-à-dire de l'inclinaison du faisceau des feux émis par le véhicule par rapport à l'horizontale, à partir de la mesure de l'angle dudit faisceau avec le sol corrigée de la pente du sol entre E1 et E2,
- une unité centrale de gestion du système et des moyens d'échange de données entre l'appareil de contrôle des feux, le dispositif de mesure de la pente du sol et ladite unité centrale, et des moyens d'enregistrement et stockage de données.

Un appareil de contrôle de l'orientation du faisceau lumineux d'un véhicule peut être par exemple un réglophare tel que décrit dans le brevet EP 2 045 591 appartenant à la demanderesse, dont l'enseignement est incorporé à la présente demande. Ce réglophare est d'emploi commode dans la mesure où il est peu encombrant et se place à faible distance du véhicule à contrôler. Associé au dispositif de mesure de la pente du sol, il donne d'excellents résultats même lorsque le véhicule n'est pas en appui sur une surface de planéité bien établie, ce qui, nous l'avons dit, est rarement le cas dans un atelier de mécanique. Le système revendiqué est ainsi adapté à une utilisation par tous les garages et ateliers mécaniques.

L'appareil de contrôle peut ainsi être installé face à un véhicule à contrôler selon un protocole connu des professionnels, alors que le véhicule est stationné dans l'atelier. Une roue avant du véhicule repose sur une zone Z1, tandis qu'une roue arrière repose sur une zone Z2. Il est entendu qu'il s'agit des roues d'un même côté droite ou gauche du véhicule, et que si le véhicule a plusieurs roues de chaque côté, l'homme de l'art sait lesquelles choisir pour déterminer l'inclinaison du véhicule. Les emplacements E1 et E2 des première et seconde unités sont choisis jouxtant respectivement les zones Z1 et Z2, de façon que les plans P1 et P2 soient au même niveau (ou quasiment au même niveau) que les zones Z1 et Z2. Les essais réalisés ont montré que la pente mesurée entre E1 et E2 est assimilable à la pente entre Z1 et Z2, sans perte de fiabilité.

Le système peut comprendre une base de données contenant les caractéristiques géométriques du châssis des différents modèles de véhicules en circulation. Ces données peuvent comprendre une valeur de rabattement de référence par modèle de véhicule, ainsi que la valeur de l'empattement des véhicules susceptibles d'être soumis au contrôle, c'est-à-dire la distance séparant les essieux avant et arrière. Cette distance est équivalente à celle séparant les zones Z1 et Z2 (ou les emplacements E1 et E2).

Le procédé de mesure de la pente décrit précédemment peut être utilisé avec le système ci-dessus pour le contrôle et l'aide au réglage de l'orientation des feux d'un véhicule, quand celui-ci est situé en un lieu quelconque d'un atelier, ses roues reposant sur des zones Z1 et Z2 non préalablement normalisées ni caractérisées. Dans ce cas, le procédé de mesure selon l'invention, met en œuvre :
- un dispositif de mesure de la pente d'un sol tel que décrit précédemment,
- un appareil de contrôle de l'orientation du faisceau des feux d'un véhicule dont les roues reposent sur le sol d'un atelier, ledit appareil étant apte à mesurer l'angle formé par ledit faisceau avec le plan du sol,
- une unité centrale de gestion comprenant des moyens d'échange de données entre l'appareil de contrôle des feux, le dispositif de mesure de la pente du sol et ladite unité centrale, et des moyens d'enregistrement et de stockage de données,
ledit procédé comprenant, les étapes préalables selon lesquelles :
- on place ledit véhicule sur le sol, une roue avant et une roue arrière dudit véhicule reposant respectivement sur des zones Z1 et Z2 quelconques du sol,
- on place ledit appareil de contrôle des feux face audit véhicule, on mesure l'angle formé par le faisceau des feux du véhicule avec le plan du sol, et on enregistre le résultat de la mesure dans une mémoire de l'unité centrale,
et ledit procédé comprenant, postérieurement à l'étape de calcul de la pente entre les emplacements E1 et E2 sur lesquels sont posés les socles des deux unités, E1 et E2 jouxtant respectivement les zones Z1 et Z2, les étapes selon lesquelles :
- on enregistre le résultat de la mesure de la pente dans une mémoire de l'unité centrale (70), et
- on calcule une valeur quantitative de l'angle de rabattement du faisceau des feux du véhicule, à partir de la mesure de l'angle dudit faisceau avec le sol, corrigée de valeur de la pente du sol entre E1 et E2.

Le procédé de mesure de la pente d'un sol selon l'invention permet aussi de paramétrer un réglophare relativement à des zones Z1 et Z2 données, et remplacer des méthodes plus fastidieuses actuellement exécutées. On peut alors contrôler l'orientation des feux d'un véhicule placé de sorte que ses roues correspondent à ces zones Z1 et Z2 prédéterminées, qui sont dans ce cas confondues avec les emplacements E1 et E2. Ce procédé de mesure de la pente d'un sol met en oeuvre :
- un dispositif de mesure de la pente d'un sol tel que précédemment décrit,
- un appareil de contrôle de l'orientation du faisceau des feux d'un véhicule dont les roues reposent sur le sol d'un atelier, ledit appareil étant apte à mesurer l'angle formé par ledit faisceau avec le plan du sol,
- une unité centrale de gestion comprenant des moyens d'échange de données entre l'appareil de contrôle des feux, le dispositif de mesure de la pente du sol et ladite unité centrale, et des moyens d'enregistrement et stockage de données,
ledit procédé comprenant les étapes selon lesquelles, postérieurement à l'étape de calcul de la pente entre des emplacements E1 et E2 prédéterminés du sol sur lesquels sont posés les socles des deux unités,
- on enregistre le résultat de la mesure de la pente dans une mémoire de l'unité centrale,
- on place le véhicule à contrôler de sorte qu'une roue avant repose sur l'emplacement E1 et une roue arrière repose sur l'emplacement E2, on place ledit appareil de contrôle des feux face audit véhicule, et on mesure l'angle formé par le faisceau des feux du véhicule avec le plan du sol, et
- on calcule une valeur quantitative de l'angle de rabattement du faisceau des feux dudit véhicule par rapport à l'horizontale, à partir de la mesure de l'angle dudit faisceau avec le sol, corrigée de la valeur préenregistrée de la pente du sol entre Z1 et Z2.

Lorsqu'on calibre un réglophare pour une zone donnée, la première étape est réalisée une seule fois, tandis que les étapes suivantes sont répétées autant de fois que souhaité avec différents véhicules.

La présente invention sera mieux comprise, et des détails en relevant apparaîtront, à la lumière de la description qui va être faite de différentes variantes de réalisation, en relation avec les figures annexées, dans lesquelles :
La fig.1 est une vue d'ensemble d'un dispositif de mesure de la pente selon l'invention.
La fig.2 est une vue en coupe de la jonction du boitier de mesure avec le support de la première unité d'un dispositif de mesure de la pente selon l'invention.
La fig.3 est une vue de l'extérieur de la coque du boitier de mesure avec ses organes de jonction au support, selon l'invention.
La fig. 4 est une vue de l'intérieur de la coque du boitier de mesure avec ses organes de jonction au support, selon l'invention.
La fig.5, est une vue de l'intérieur de la coque du boitier de mesure selon l'invention, avec sa carte électronique.
La fig.6, est une vue de l'intérieur de la coque du boitier de mesure selon l'invention, avec son casier destiné aux moyens d'alimentation.
La fig.7 est une vue schématique d'un système de réglage des feux d'un véhicule, comprenant un réglophare et un dispositif de mesure de la pente selon l'invention
La fig.8 est une représentation synoptique des composants électroniques d'un système de de réglage des feux d'un véhicule, selon l'invention.
La fig.9 est une représentation des positions relatives dans l'espace pris par les éléments du dispositif selon l'invention durant son utilisation.

### EXEMPLE 1 : Dispositif de mesure de pente

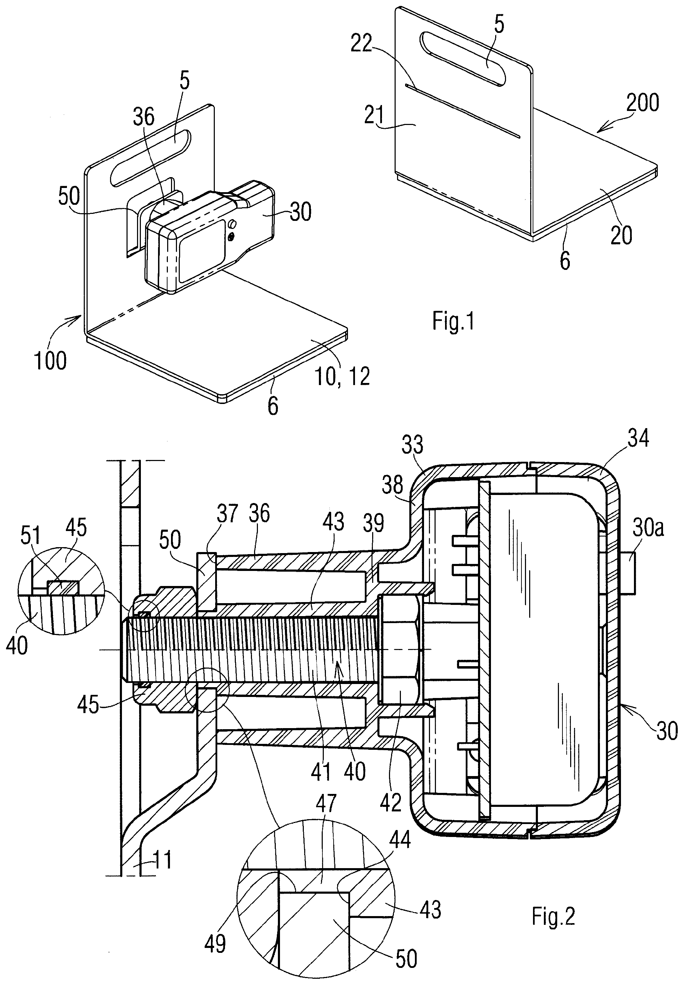

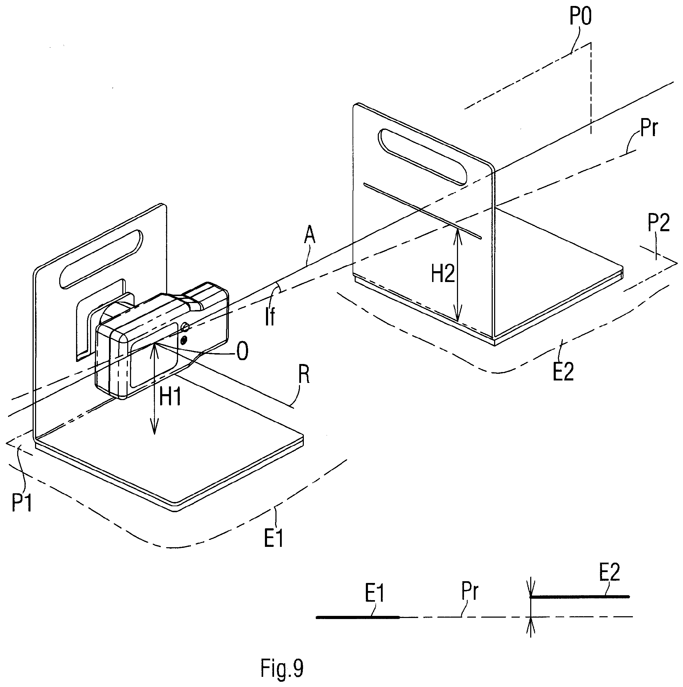

La fig.1 et la fig.9 présentent une vue d'ensemble d'un dispositif de mesure de la pente, avec ses deux unités 100 et 200, structurellement distinctes. Il est précisé que dans ce qui suit, les termes arrière, avant, inférieur, supérieur, etc., se réfèrent à une position relative des deux unités entre elles et par rapport au sol sur lequel elles sont posées pour procéder à une mesure de pente.

La première unité 100 comprend le premier socle 10 qui s'étend dans le plan P1. Ce premier socle 10 est formé d'une plaque 12, associée orthogonalement par un de ses bords à la plaque 11. Les plaques 11 et 12 sont ici réalisées en métal, d'un seul tenant par pliage d'une tôle. La plaque 11 fait fonction de support du boitier de mesure 30 par l'intermédiaire de moyens de jonction coopérant avec un percement 49 de la plaque support prévu à cet effet. Le boitier de mesure 30 se présente comme un corps formé de parois rigides délimitant un espace qui renferme des moyens d'émission d'un faisceau lumineux et différents composants électroniques, dont un accéléromètre 35, apte à générer un signal électrique proportionnel à sa propre inclinaison par rapport à une position de référence Pr. Le faisceau lumineux, émis à travers un orifice 31 de la paroi antérieure du boîtier 30, définit l'axe A. Les moyens de jonction unissant le boitier de mesure 30 et la plaque support 11 autorisent un pivotement de l'axe A dans un plan Po orthogonal au plan P1 du premier socle 10. Dans le présent exemple, ils présentent un axe de rotation R sécant de l'axe A au point O et parallèle au plan P1 du premier socle 10.

La seconde unité 200 comprend le second socle 20 s'étendant dans le plan P2, qui porte perpendiculairement la platine cible 21. Le second socle 20 et la platine cible 21 sont ici réalisés en métal, d'un seul tenant par pliage d'une tôle. La platine cible est dotée de la mire 22, destinée à servir de visée lors du réglage de l'orientation du faisceau lumineux. Dans le présent exemple, la mire 22 est constituée d'une fente rectiligne continue, obtenue par enlèvement du métal, sur une bande de 2 mm à 3 mm parallèle au plan P2 du second socle.

Comme on le voit sur la fig.9, les socles 10 et 20 sont destinés à reposer sur le sol respectivement à des emplacements E1 et E2 dont on souhaite déterminer la différence de niveau. Lorsqu'un opérateur oriente le boitier de mesure 30 en le faisant pivoter de sorte que le faisceau lumineux pointe vers la mire 22, une inclinaison If par rapport au plan P1 témoigne d'une différence de niveaux entre les plans P1 et P2. L'accéléromètre 35 subit un pivotement de même amplitude et délivre un signal électrique représentatif de l'inclinaison If de l'axe A. L'accéléromètre est un capteur qui génère un signal électrique en fonction de sa propre inclinaison, par rapport à une position de référence préalablement définie et pour laquelle il a été étalonné. De manière commode, il est configuré de sorte que son inclinaison est nulle lorsque le faisceau lumineux est horizontal.

L'axe de rotation R est situé à une hauteur H1 du plan P1, et la mire 22 de la platine cible 21 est placée à une hauteur H2 du second socle 20, hauteurs qui sont précisément définies par constitution. Dans le cas présent, le dispositif a été conçu pour que H1 et H2 soient identiques. Il en découle que, en l'absence de déclivité du sol, le faisceau pointant sur la mire 22 est horizontal et l'inclinaison de l'accéléromètre est nulle. Par contre, en cas de différence de niveau entre P1 et P2, l'amplitude de l'inclinaison subie par l'accéléromètre 35 est strictement proportionnelle à l'inclinaison If du faisceau lumineux pointant vers la mire 22. Le signal généré est ainsi proportionnel à ladite inclinaison. D'autres configurations sont possibles, avec une position de référence Pr non horizontale et/ou des hauteurs H1 et H2 différentes. Il faudra alors intégrer ces données dans les outils de calcul pour obtenir une expression standardisée de la pente (valeur d'angle par rapport à un plan horizontal).

L'agencement des unités 100 et 200, présenté dans son principe général ci-dessus, a été conçu afin que les mesures puissent être concrètement réalisées et atteignent un degré de précision et de fiabilité au moins égal à celui exigé par les normes s'appliquant aux contrôle technique des véhicules. Pour ce faire, le dispositif se devait d'être particulièrement performant pour être utilisable en tout lieu, et non uniquement sur les installations dédiées et spécialement aménagées. Également, il devait être robuste compte tenu de son environnement d'utilisation. Les tests réalisés permettent d'affirmer que ces objectifs sont non seulement atteints, mais même dépassés.

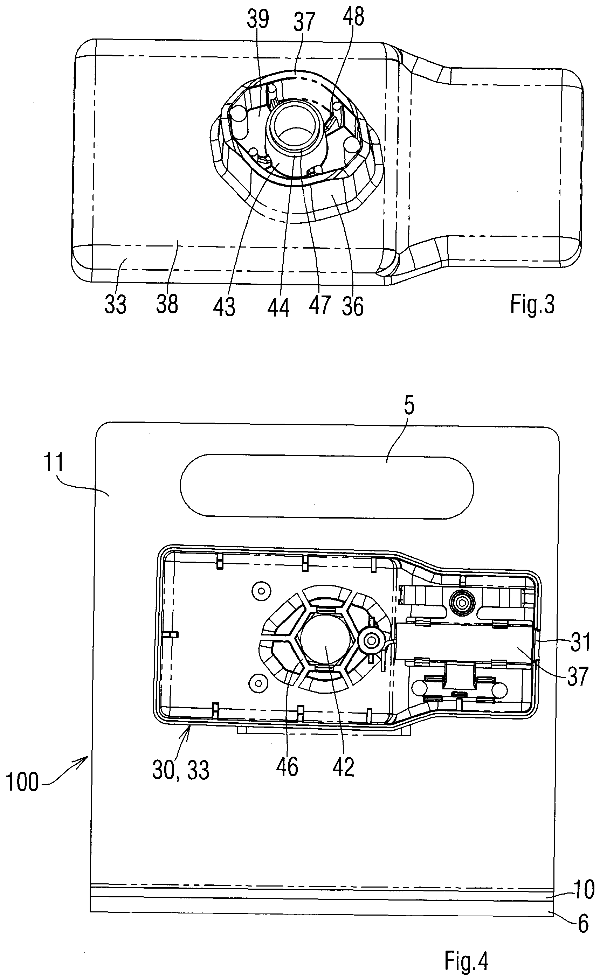

Selon un aspect, illustré aux figures 2, 3 et 4, les structures du boitier de mesure 30 et des moyens de jonction à la plaque support 11 ont fait l'objet mises aux point minutieuses pour que l'axe de rotation R soit parfaitement parallèle à la surface en contact avec le sol (le plan P1) et pour autoriser un pivotement du faisceau lumineux dans le plan Po exclusivement, par simple manoeuvre du boîtier de mesure 30. La gageure était que ce faisant, celui-ci devait conserver son orientation après réglage.

Le boitier 30 comporte la coque 33 creuse dotée d'un fond 38 plan à partir duquel s'étend vers l'extérieur, la couronne 36 contribuant à la jonction avec la plaque 11. Le couvercle 34 se fixe à la coque pour refermer le compartiment intérieur du boitier de mesure 30 par un des nombreux moyens connus de l'homme du métier, par exemple par vissage. La coque 33 et le couvercle 34 définissent un compartiment intérieur de forme allongée selon un axe longitudinal d'axe A, dont la paroi antérieure comporte l'orifice 31 par lequel le faisceau lumineux est émis.

La couronne 36 présente un axe confondu avec l'axe de rotation R et une lisière libre 37 constituant une surface d'appui contre la plaque support 11. Le fond 38 de la coque 33 est ainsi parallèle à la plaque support 11. La lisière 37, de forme oblongue, prend appui sur la plaque support 11 à une distance de la bordure du percement 49, allant ici de 0,5 cm à 0,8 cm de part et d'autre. Ce percement 49 prévu pour recevoir les moyens de fixation avec le boitier 30, est centré sur l'axe de rotation R à la hauteur H1.

Des moyens de fixation de la coque 33 du boitier 30 à la plaque support 11 sont présents dans l'espace délimité par la couronne 36. Un fourreau 43, traversant, coaxial de la couronne 36, est conçu pour recevoir en coulissement la tige filetée 41 d'une vis 40. Le fourreau 43 a un orifice externe (opposé au boitier) délimité par une bordure 44 circulaire, prenant appui à la périphérie immédiate du percement 49 de la plaque support 11. La bordure du fourreau 43 est en outre prolongée par l'embout 47, circulaire, d'une longueur égale à l'épaisseur de la plaque 11. Son diamètre interne est identique au diamètre du fourreau et son diamètre externe est égal au diamètre du percement 49 de la plaque 11, de sorte que l'embout 47 s'insère par ajustement glissant dans ledit percement en opérant un centrage de la vis 40.

La tige filetée 41 quant à elle, traverse le fourreau 43 et le percement 49 pour se visser sur l'écrou 45, lequel est muni d'une bague de freinage 51. À l'opposé, le fourreau 43 est doté d'un orifice interne débouchant dans le logement 46 ménagé dans le fond 38 de la coque 33, dans lequel s'insère la tête 42 de la vis 40. Le logement 46 et la tête 42 de la vis sont identiques par leurs dimensions et par leur forme, ici hexagonale, de manière qu'ils sont mus solidairement lors d'un déplacement du boitier 30. Le fourreau 43 est solidarisé à la couronne 36 par la paroi transversale 39 formant épaulement au niveau de l'orifice interne et réalisant ainsi une butée axiale de la tête 42 de la vis 40 lorsque l'écrou 45 est serré. Des nervures 48, ménagées sous la paroi 39 entre la couronne 36 et le fourreau 43 renforcent la rigidité de l'ensemble.

Les moyens de jonction avec le boitier de mesure 30 sont fixés à la plaque support 11 au niveau d'une découpe formant la patte 50, infléchie au-dessus du socle 10. Le percement 49 se trouve au centre de la patte 50. La patte 50 se situe dans un plan parallèle au plan de la plaque support 11, à une distance au moins égale à la hauteur de l'écrou 45, de sorte que celui-ci ne dépasse pas à l'arrière de la plaque 11. Par ailleurs, la plaque support 11 et la plaque cible 21 comportent chacune un trou oblong 5 à proximité de leur bordure supérieure, qui fait office de poignée de préhension, sans créer de relief. Les unités 100, 200 sont ainsi facilement prises en main et peuvent être emboitées pour un rangement compact, encore facilité quand elles ont des dimensions identiques, par exemple une forme carrée de 15 cm de côté.

Selon un autre aspect contribuant à l'obtention de mesures de pente avec un haut degré de précision, les unités 100, 200 sont stabilisées d'une part du fait de leur propre poids, et d'autre part grâce à une couche de mousse de caoutchouc, qui est appliquée sous les socles 10, 20. On utilise par exemple un élastomère de type EPDM (éthylène-propylène-diène monomère) de 5 mm d'épaisseur suffisamment moelleux pour se déformer sous le poids de l'unité qui la comporte au contact d'aspérités du sol ou de gravillons jusqu'à 4 mm.

Des organes de mesure et de calcul sont logés dans le boitier 30, ou déportés sur un système maître. Le faisceau lumineux est généré par un pointeur, ici une diode laser 32 installée dans la partie avant du boiter de mesure 30, selon un axe passant par le point O (section de l'axe A et de l'axe de rotation R) et l'orifice de sortie 31, définissant l'axe A. La diode laser 32 a une puissance de 3 mW, ce qui est sans danger pour l'utilisateur et émet dans le rouge pour une visualisation optimale. Le pinceau lumineux a un diamètre variant de 1 mm à 3 mm selon la distance parcourue jusqu'à la mire (entre 2 m et 5 m dans les applications de contrôle des feux).

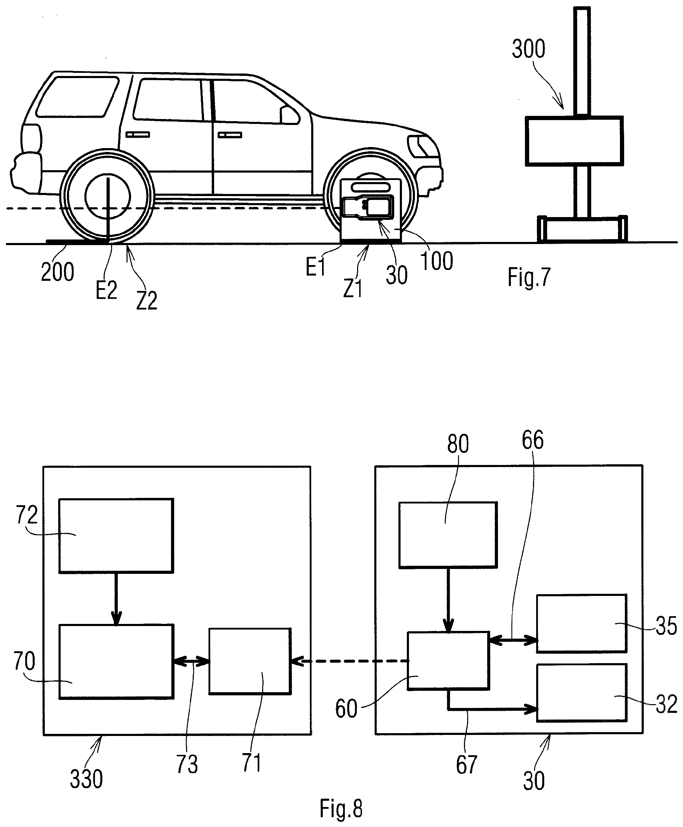

Comme schématisé à la figure 8, le boîtier 30 contient aussi une carte électronique 64 comprenant différents composants : un accéléromètre numérique 35, des moyens de transmission 66 des données provenant de l'accéléromètre 35, un connecteur 67 à la diode laser 32, ainsi qu'un module 60 de communication sans fil avec l'unité centrale d'un outil informatique externe.

L'accéléromètre 35 utilisé ici est un accéléromètre trois axes (x, y, z), ayant une résolution de 0,244 mg/LSB, soit 0,0244% de pente. L'axe z est colinéaire à l'accélération de la gravité lorsque le composant est à plat, selon le calibrage préalablement effectué. Si le composant est incliné, les trois axes sont soumis à une accélération non nulle liée à la gravité, fournissant trois valeurs. Ces valeurs peuvent être transmises par un bus informatique 66 au module 60 de communication sans fil, lequel les envoie à un processeur externe 70, appartenant par exemple à l'unité centrale 330 d'un réglophare 300, pour le calcul d'angle. Le module 60 est par exemple un module BLE (bluetooth à basse consommation), communiquant avec un module de communication sans fil de l'unité centrale externe via un port d'entrée-sortie, pour transmettre les données. On peut paramétrer la transmission des données selon une fréquence prédéterminée, par exemple toutes les 250 ms, ou bien à la demande par commande manuelle, ce qui permet de limiter nettement la consommation d'énergie.

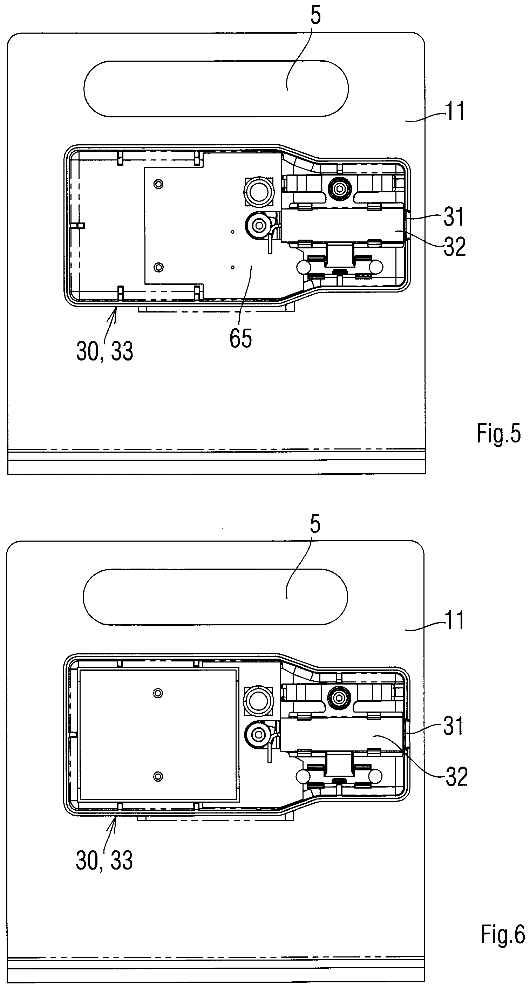

Une alimentation électrique autonome est prévue dans le boitier 30, sous la forme de piles ou de batteries 80 installées dans un casier 81 superposé à la carte électronique 64, comme présenté aux figures 5 et 6.

Pour la mesure de la pente du sol entre deux emplacements E1 et E2, on peut procéder comme suit:
- placer les socles 10, 20 des deux unités 100, 200 aux emplacements E1 et E2, et mettre en marche le dispositif grâce au bouton 5 et orienter les unités de sorte que le faisceau émis coupe la platine 21 ;
- faire pivoter manuellement le boitier de mesure 30 dans le plan Po jusqu'à ce que le faisceau lumineux pointe sur la mire 22 ;
- enregistrer le signal électrique représentatif de l'inclinaison If atteinte par le faisceau, correspondant aux valeurs selon les axes x, y et z que fournit l'accéléromètre 35 dans le processeur 70 du système maître 300 ;
- calculer l'angle de l'inclinaison If du faisceau lumineux, correspondant à la pente entre les emplacements E1 et E2.

On note que la valeur de la pente, commodément exprimée en %, est obtenue à partir de l'inclinaison If, c'est-à-dire directement d'une mesure d'angle qui est indépendante de la distance séparant les emplacements E1 et E2. Ainsi, pour un accéléromètre tel qu'utilisé ici, réalisant la mesure d'angle sur une plage allant de -1,5% à +1,5% par rapport à l'horizontale avec un écart maximum de +/-0,2%, la valeur de la pente affichée sera entachée d'une erreur maximale de 0,4%, et ce quelle que soit la distance séparant les emplacements E1 et E2.

### EXEMPLE 2 : Système de contrôle des feux

Un système de réglage des feux d'un véhicule conforme à l'invention est représenté à la fig. 7. Il comprend un réglophare 300 et un dispositif de mesure de la pente comme celui de l'exemple précédent, avec ses deux unités 100, 200. Le réglophare peut être tel que décrit dans EP 2045591, dans sa structure et son fonctionnement. La méthode de mesure du rabattement est décrite aux paragraphes 48 et 49. Ces descriptions sont incorporées au présent exemple. En particulier, le réglophare comprend une unité centrale 330, une interface utilisateur (clavier, afficheur), des moyens d'enregistrement et de stockage des résultats de mesures, le tout alimenté par des moyens autonomes 72, par exemple une batterie 12 V au lithium.

Le système comprend des moyens électroniques assurant les différentes fonctions (communication, transmission, calcul, ...) dont un synoptique est fourni à la fig.8. L'unité centrale 330 comporte un composant sentinelle 71 permettant la prise en charge des données provenant du module BLE 60 du dispositif de mesure de la pente du sol. Ces données sont transmises au processeur 70 à l'aide d'une connexion 73 de type USB (bus universel en série) ou autre.

Comme on le voit à la fig.7, un véhicule placé pour un contrôle, repose par une roue avant sur une zone Z1 et par une roue arrière sur une zone Z2. Les unités 100, 200 du dispositif de mesure de pente sont placées au contact des gentes. À noter que la jonction permet une rotation du boîtier de mesure 30 à 360° ce qui permet d'utiliser les unités 100, 200 à droite et à gauche du véhicule, sachant que l'unité 100 émettant le faisceau lumineux doit toujours être placée au niveau des roues avant. Les emplacements E1 et E2 sont donc au plus près des zones Z1 et Z2. Les niveaux de E1 et Z1 sont alors considérés comme identiques, de même que ceux de E2 et Z2. La surface en contact avec le sol des socles 10, 20 est un carré de 15 cm de côté, pour correspondre à ce qui est requis par le cahier des charges SR/V/042 de l'UTAC (Union Technique de l'Automobile, du Motocycle et du Cycle) relatif aux opérations d'installation, d'étalonnage et de maintenance des dispositifs de contrôle du réglage des feux.

La mesure de pente pourra être faite d'un côté du véhicule (par exemple côté droite) afin d'estimer la pente moyenne du véhicule, puis transmise au processeur du système maître. Si une deuxième mesure est effectuée de l'autre côté du véhicule (côté gauche), le système électronique effectuera automatiquement la moyenne des deux mesures afin de calculer précisément la pente moyenne du véhicule.

La pente est donnée en % avec une erreur d'au maximum de 0,4% identique quel que soit l'empattement des véhicules (distance séparant les emplacements E1 et E2).

### PRECISION

La méthode actuellement appliquée en contrôle technique est celle décrite dans le cahier des charges SR/V/042 de l'UTAC. Celui-ci définit l'erreur de pente moyenne du sol tolérée au regard de l'empattement des véhicules, c'est-à-dire en fonction de la distance entre les essieux qui est la distance séparant les zones d'appui des roues Z1 et Z2. L'erreur tolérée sur la pente moyenne est de +/-7 mm pour un empattement jusqu'à 3 m et de +/-12 mm au-delà, soit exprimées en %, les erreurs sont les suivantes :

**Tableau 1**

| **Empattement en m** | **Erreur tolérée en mm** | **Erreur pente tolérée en %** |
|---|---|---|
| 2 | 14 | 0,70 |
| 2,5 | 14 | 0,56 |
| 3 | 14 | 0,47 |
| 3,5 | 24 | 0,69 |
| 4 | 24 | 0,60 |
| 4,5 | 24 | 0,53 |

Ces erreurs sont nettement supérieures à l'erreur maximum des résultats obtenus avec le dispositif de mesure selon l'invention (soit 0,4%), en particulier pour des 5 véhicules courts.

Notons que le tableau 1 donne des tolérances sur la pente moyenne des zones de contrôle des véhicules qui doivent être respectées pour être homologuées. Or, cette pente moyenne est calculée pour des points fixes répartis selon un schéma prédéterminé. En pratique, quand un véhicule sera amené sur la zone de contrôle, la probabilité que ses roues tombent exactement sur ces points fixes est très faible. Cette incertitude augmente encore l'erreur possible sur la mesure faite classiquement. En comparaison, le dispositif revendiqué permet d'apprécier exactement la pente du véhicule par rapport à sa position réelle, même lorsque le sol présente des irrégularités locales s'écartant de la moyenne, et avec une précision identique.

Ainsi, le réglage des feux peut être fait sur une surface quelconque, dans un atelier de réparation mécanique ou autre lieu non homologué, ne disposant pas d'aire dédiée spécialement aménagé, à l'aide d'un réglophare assisté de l'inclinomètre selon l'invention, avec une précision et une fiabilité au moins aussi satisfaisantes que dans un centre de contrôle technique équipé selon les normes actuelles.

## Revendications

1. Dispositif de mesure de la pente d'un sol entre deux emplacements E1 et E2 distants l'un de l'autre, comprenant deux unités structurellement distinctes destinées à être posées au sol, à savoir une première unité (100) comprenant :
- un premier socle (10) s'étendant dans un plan P1, apte à reposer sur le sol à l'emplacement E1,
- ledit premier socle étant associé à un support portant un boitier de mesure (30), dans lequel sont montés fixes i) des moyens d'émission d'un faisceau lumineux d'axe A à travers un orifice (31) ménagé dans la paroi antérieure dudit boîtier, et ii) un accéléromètre (35) apte à générer un signal électrique proportionnel à sa propre inclinaison par rapport à une position de référence Pr,
et une seconde unité (200) comprenant :
- un second socle (20) s'étendant dans un plan P2, apte à reposer sur le sol à l'emplacement E2,
- ledit second socle portant une platine cible (21) dont une face est dotée d'une mire (22) située à une hauteur H2 définie dudit second socle, ledit socle et ladite platine cible s'étendant dans des plans sensiblement perpendiculaires entre eux,
le boitier de mesure (30) étant monté articulé sur ledit support par des moyens de jonction autorisant un pivotement de l'axe A autour d'un point O situé à une hauteur H1 définie du premier socle (10), dans un plan Po orthogonal au plan P1 jusqu'à une inclinaison If telle que ledit faisceau lumineux pointe vers la mire (22) lorsque lesdites deux unités sont posées respectivement aux emplacements E1 et E2,
l'accéléromètre (35) étant conformé pour subir ledit pivotement et délivrer un signal électrique représentatif de l'inclinaison If de l'axe A par rapport au plan P1, ledit accéléromètre étant relié à des moyens de traitement du signal et de calcul configurés pour fournir une mesure quantitative de la pente entre les emplacements E1 et E2 à partir de l'inclinaison If du faisceau lumineux,
ledit dispositif étant **caractérisé en ce que** lesdits moyens d'émission comprennent un pointeur à diode laser (32) apte à projeter à travers l'orifice (31) du boitier de mesure (30) un faisceau lumineux dont le diamètre est de moins de 5 mm à une distance de 5 m.

2. Dispositif selon la revendication 1, ***caractérisé en ce que*** lesdits moyens de jonction entre le boitier de mesure (30) et le support de la première unité (100) présentent un axe de rotation R sécant de l'axe A au point O et parallèle au plan P1 du premier socle (10), la hauteur H1 de l'axe de rotation R par rapport au plan P1 du premier socle (10) et la hauteur H2 de la mire (22) par rapport au plan P2 étant identiques.

3. Dispositif selon l'une des revendications précédentes, ***caractérisé en ce que*** le premier socle (10) et le support sont formés de deux plaques (11, 12) en métal liées perpendiculairement l'une à l'autre par une de leurs bordures, la plaque support (11) comportant un percement (49) apte à coopérer avec les moyens de jonction du boitier de mesure (30).

4. Dispositif selon la revendication précédente, ***caractérisé en ce que*** le boitier de mesure (30) comprend une coque (33) creuse dotée d'un fond (38) plan parallèle à la plaque support (11), et un couvercle (34), la coque (33) et le couvercle (34) définissant un compartiment de forme allongée selon un axe longitudinal confondu avec l'axe A, le fond (38) de la coque (33) comportant une couronne (36) s'étendant extérieurement selon un axe confondu avec l'axe de rotation R, dans laquelle sont ménagés des moyens de fixation de la coque (33) du boitier de mesure (30) à la plaque support (11), la lisière libre (37) de la couronne (36) formant une surface d'appui contre la plaque support (11).

5. Dispositif selon la revendication précédente, ***caractérisé en ce que*** les moyens de fixation comportent une vis (40) dotée d'une tige filetée (41) et d'une tête (42) polygonale, et un fourreau (43) coaxial de la couronne (36), apte à recevoir la tige filetée (41) de la vis (40), ledit fourreau ayant un orifice délimité par une bordure (44) circulaire apte à prendre appui à la périphérie du percement (49) de la plaque support (11), la tige filetée (41) de la vis (40) traversant ledit orifice et ledit percement pour recevoir un écrou (45) de fixation muni d'un élément de freinage, et un orifice interne débouchant dans un logement (46) ménagé dans le fond (38) de la coque (33) apte à recevoir la tête (42) de ladite vis, ledit logement et ladite tête de vis ayant une section polygonale identique.

6. Dispositif selon la revendication 5, ***caractérisé en ce que*** la plaque support (11) comporte une découpe centrée sur le percement (49) recevant les moyens de jonction avec le boitier de mesure (30), ladite découpe étant infléchie pour former une patte (50) s'étendant au-dessus du socle (10), dans un plan parallèle au plan de la plaque support (11), à une distance au moins égale à la hauteur de l'écrou de fixation (45) du boitier de mesure (30).

7. Dispositif selon l'une quelconque des revendications précédentes, ***caractérisé en ce que*** le second socle (20) et la platine cible (21) de la seconde unité (200) sont formés de deux plaques en métal liées l'une à l'autre par une de leurs bordures selon une orientation perpendiculaire, ladite platine cible comportant la mire (22) matérialisée par un point ou une bande rectiligne continue ou discontinue.

8. Dispositif selon la revendication précédente, ***caractérisé en ce que*** la mire (22) de la platine cible (21) est constituée d'une bande rectiligne mince de moins de 5 mm, parallèle au plan P2 du second socle (20), réalisée par impression, gravure, perforation, ou évidement continu ou discontinu du métal.

9. Dispositif selon l'une quelconque des revendications précédentes, ***caractérisé en ce que*** les premier et second socles (10, 20) sont revêtus sur leur face inférieure, d'une couche (6) d'un matériau souple, apte à se déformer au contact d'aspérités du sol ou de fragments de matière.

10. Dispositif selon l'une quelconque des revendications précédentes, *caractérisé en ce qu*'il comprend un module électronique de communication sans fil (60) avec une unité centrale (70), des moyens d'enregistrement, des moyens de stockage et des moyens d'édition des résultats de mesures, et une alimentation électrique autonome (80).

11. Système de contrôle et d'aide au réglage de l'orientation des feux d'un véhicule dont les roues reposent sur le sol d'un atelier, une roue avant reposant sur une zone Z1 et une roue arrière reposant sur une zone Z2, le système étant *caractérisé en ce qu*'il comprend :
- un dispositif de mesure de la pente du sol entre deux emplacements E1 et E2, selon l'une des revendications précédentes,
- un appareil (300) de contrôle de l'orientation du faisceau des feux émis par un véhicule, apte à mesurer l'angle formé par le faisceau des feux avec le plan du sol,
- des moyens de calcul fournissant une mesure quantitative de la pente du sol entre les emplacements E1 et E2, choisis de sorte qu'ils jouxtent respectivement les zones Z1 et Z2,
- des moyens de calcul fournissant une valeur quantitative de l'angle de rabattement du faisceau des feux à partir de la mesure de l'angle dudit faisceau avec le sol corrigée de la pente du sol entre E1 et E2,
- une unité centrale (70) de gestion comprenant des moyens d'échange de données (71) entre l'appareil (300) de contrôle des feux, le dispositif de mesure de la pente du sol et ladite unité centrale, et des moyens d'enregistrement et stockage de données.

12. Procédé de mesure de la pente d'un sol entre deux emplacements E1 et E2 distants l'un de l'autre, *caractérisé en ce qu*'il comprend les étapes consistant à :
- placer les socles (10, 20) des deux unités (100, 200) d'un dispositif de mesure de la pente d'un sol selon l'une des revendications 1 à 10 aux emplacements E1 et E2,
- faire pivoter le boitier de mesure (30) dans un plan Po orthogonal au plan P1 du premier socle (10) jusqu'à ce que le faisceau lumineux émis par les moyens d'émission pointe vers la mire (22),
- enregistrer le signal électrique représentatif de l'inclinaison If atteinte par le faisceau, que fournit l'accéléromètre (35),
- calculer la pente entre les emplacements E1 et E2 à partir de l'inclinaison If du faisceau lumineux.

## Patentansprüche

1. Bodenneigungsmessvorrichtung zwischen zwei voneinander beabstandeten Stellen E1 und E2, bestehend aus zwei strukturell unterschiedlichen Einheiten, die auf dem Boden platziert werden sollen, nämlich einer ersten Einheit (100) mit:
- einer ersten Basis (10), die sich in einer Ebene P1 erstreckt und an der Stelle E1 auf dem Boden aufliegen kann,
- worin die erste Basis mit einem Träger verbunden ist, der einen Messkasten (30) trägt, in dem fest montiert sind: i) eine Emissionseinrichtung für einen Lichtstrahl mit einer Achse A durch eine in der Vorderwand des Kastens ausgebildete Öffnung (31) und ii) ein Beschleunigungsmesser (35), der ein elektrisches Signal erzeugen kann, das proportional zu seiner eigenen Neigung relativ zu einer Referenzposition Pr ist,
und einer zweiten Einheit (200), mit:
- einer zweiten Basis (20), die sich in einer Ebene P2 erstreckt und an der Stelle E2 auf dem Boden aufliegen kann,
- worin die zweite Basis eine Zielplatte (21) trägt, deren eine Seite mit einem Visier (22) versehen ist, das sich in einer definierten Höhe H2 der zweiten Basis befindet, worin sich die Basis und die Zielplatte in Ebenen erstrecken, die im Wesentlichen senkrecht zueinander stehen,
worin der Messkasten (30) gelenkig an dem Träger angebracht ist, und zwar mittels Verbindungsmitteln, die es der Achse A ermöglichen, um einen Punkt O zu schwenken, der sich in einer definierten Höhe H1 von der ersten Basis (10) entfernt befindet, und zwar in einer Ebene Po, die orthogonal zur Ebene P1 ist, bis zu einer Neigung If, sodass der Lichtstrahl auf das Visier (22) zeigt, wenn die beiden Einheiten jeweils an den Stellen E1 und E2 platziert sind,
worin der Beschleunigungsmesser (35) ausgestaltet ist, die Drehung durchzuführen und ein elektrisches Signal zu liefern, das die Neigung If der Achse A relativ zur Ebene P1 repräsentiert; der Beschleunigungsmesser mit Signalverarbeitungs- und Berechnungsmitteln verbunden ist, die ausgestaltet sind, eine quantitative Messung der Neigung zwischen den Punkten E1 und E2 auf der Grundlage der Neigung If des Lichtstrahls zu liefern,
worin die Vorrichtung **dadurch gekennzeichnet ist, dass** die Emissionseinrichtung einen Laserdiodenpointer (32) umfasst, der geeignet ist, durch die Öffnung (31) des Messkastens (30) einen Lichtstrahl zu projizieren, dessen Durchmesser in einer Entfernung von 5 m weniger als 5 mm beträgt.

2. Vorrichtung nach Anspruch 1, **dadurch gekennzeichnet, dass** die Verbindungsmittel des Messkastens (30) und des Trägers für die erste Einheit (100) eine Drehachse R aufweisen, die die Achse A im Punkt O schneidet und parallel zur Ebene P1 der ersten Basis (10) verläuft, worin die Höhe H1 der Drehachse R relativ zur Ebene P1 der ersten Basis (10) und die Höhe H2 des Visiers (22) relativ zur Ebene P2 identisch sind.

3. Vorrichtung nach einem der vorstehenden Ansprüche, **dadurch gekennzeichnet, dass** die erste Basis (10) und der Träger aus zwei Metallplatten (11, 12) bestehen, die entlang einer ihrer Kanten senkrecht zueinander verbunden sind, worin die Trägerplatte (11) ein Loch (49) aufweist, das zum Zusammenwirken mit den Verbindungsmitteln des Messkastens (30) geeignet ist.

4. Vorrichtung nach dem vorstehenden Anspruch, **dadurch gekennzeichnet, dass** der Messkasten (30) eine hohle Schale (33) mit einem flachen Boden (38) parallel zur Trägerplatte (11) und einem Deckel (34) umfasst, worin die Schale (33) und der Deckel (34) ein längliches Fach entlang einer Längsachse definieren, die mit der Achse A zusammenfällt, worin der Boden (38) der Schale (33) einen Rand (36) aufweist, der sich entlang einer mit der Drehachse R zusammenfallenden Achse nach außen erstreckt, worin Mittel vorgesehen sind, um die Schale (33) des Messkastens (30) an der Trägerplatte (11) zu befestigen, worin die freie Kante (37) des Randes (36) eine Auflagefläche gegen die Trägerplatte (11) bildet.

5. Vorrichtung nach dem vorstehenden Anspruch, **dadurch gekennzeichnet, dass** die Befestigungsmittel eine Schraube (40) mit einem Gewindeschaft (41) und einem polygonalen Kopf (42), und eine mit dem Rand (36) koaxiale Hülse (43) umfassen, die den Gewindeschaft (41) der Schraube (40) aufnehmen kann, worin die Hülse eine Öffnung aufweist, die durch einen kreisförmigen Rand (44) begrenzt ist, der am Umfang des Lochs (49) in der Trägerplatte (11) anliegen kann, worin der Gewindeschaft (41) der Schraube (40) durch die Öffnung und das Loch verläuft, um eine mit einem Sicherungselement ausgestattete Befestigungsmutter (45) aufzunehmen, und eine innere Öffnung, die in eine im Boden (38) der Schale (33) vorgesehene Aufnahme (46) führt, die den Kopf (42) der Schraube aufnehmen kann, worin die Aufnahme und der Schraubenkopf einen identischen polygonalen Querschnitt aufweisen.

6. Vorrichtung nach Anspruch 5, **dadurch gekennzeichnet, dass** die Trägerplatte (11) einen Ausschnitt aufweist, der auf das Loch (49) zentriert ist, das die Mittel zum Verbinden mit dem Messkasten (30) aufnimmt, worin der Ausschnitt gebogen ist, um eine Lasche (50) zu bilden, die sich über die Basis (10) hinaus erstreckt, in einer Ebene parallel zur Ebene der Trägerplatte (11), in einem Abstand, der mindestens der Höhe der Befestigungsmutter (45) des Messkastens (30) entspricht.

7. Vorrichtung nach einem der vorstehenden Ansprüche, **dadurch gekennzeichnet, dass** die zweite Basis (20) und die Zielplatte (21) der zweiten Einheit (200) aus zwei Metallplatten (22) gebildet sind, die an einer ihrer Kanten in senkrechter Ausrichtung miteinander verbunden sind, worin die Zielplatte das Visier (22) umfasst, das durch einen Punkt oder eine durchgehende oder unterbrochene gerade Linie dargestellt ist.

8. Vorrichtung nach dem vorstehenden Anspruch, **dadurch gekennzeichnet, dass** das Visier (22) der Zielplatte (21) aus einem dünnen, geraden Streifen mit einer Breite von weniger als 5 mm besteht, der parallel zur Ebene P2 der zweiten Basis (20) verläuft und durch Drucken, Gravieren, Perforieren oder durch kontinuierliche oder diskontinuierliche Vertiefungen des Metalls hergestellt wird.

9. Vorrichtung nach einem der vorstehenden Ansprüche, **dadurch gekennzeichnet, dass** die erste und die zweite Basis (10, 20) auf ihrer Unterseite mit einer Schicht (6) aus einem flexiblen Material beschichtet sind, das sich bei Kontakt mit unebenem Boden oder Materialfragmenten verformen kann.

10. Vorrichtung nach einem der vorstehenden Ansprüche, **dadurch gekennzeichnet, dass** diese ein drahtloses elektronisches Kommunikationsmodul (60) mit einer zentralen Verarbeitungseinheit (70), Mitteln zum Aufzeichnen, Mitteln zum Speichern und Mitteln zum Bearbeiten der Messergebnisse sowie einer autonomen Stromversorgung (80) umfasst.

11. System zur Steuerung und Unterstützung der Ausrichtung der Scheinwerfer eines Fahrzeugs, dessen Räder auf dem Boden einer Werkstatt stehen, worin ein Vorderrad auf dem Bereich Z1 und ein Hinterrad auf dem Bereich Z2 steht, worin das System **dadurch gekennzeichnet ist, dass** es umfasst:
- eine Vorrichtung zum Messen der Neigung des Bodens zwischen zwei Stellen E1 und E2 gemäß einem der vorstehenden Ansprüche,
- eine Einrichtung (300) zum Steuern der Ausrichtung des von einem Fahrzeug ausgestrahlten Lichtstrahls, die in der Lage ist, den Winkel zu messen, den der Lichtstrahl mit der Bodenebene bildet,
- Berechnungsmittel, die eine quantitative Messung der Neigung des Bodens zwischen den Stellen E1 und E2 liefern, die so gewählt sind, dass sie jeweils an die Zonen Z1 und Z2 angrenzen,
- Berechnungsmittel, die einen quantitativen Wert für den Ablenkungswinkel des Lichtstrahls auf der Grundlage der Messung des Winkels des Strahls zum Boden liefern, korrigiert um die Neigung des Bodens zwischen E1 und E2,
- eine zentrale Steuereinheit (70) mit Mitteln zum Austausch von Daten (71) zwischen der Scheinwerfersteuervorrichtung (300), der Bodenneigungsmessvorrichtung und der zentralen Einheit sowie Mitteln zum Aufzeichnen und Speichern von Daten.

12. Verfahren zum Messen der Neigung eines Bodens zwischen zwei voneinander entfernten Orten E1 und E2, **dadurch gekennzeichnet, dass** es die Schritte umfasst:
- Anordnen der Basen (10, 20) der beiden Einheiten (100, 200) einer Bodenneigungsmessvorrichtung gemäß einem der Ansprüche 1 bis 10 an den Orten E1 und E2,
- Drehen des Messkastens (30) in einer Ebene Po orthogonal zur Ebene P1 der ersten Basis (10), bis der von der Emissionseinrichtung ausgesendete Lichtstrahl auf das Ziel (22) zeigt,
- Aufzeichnen des elektrischen Signals, das die vom Strahl erreichte Neigung If repräsentiert und vom Beschleunigungsmesser (35) geliefert wird,
- Berechnen der Neigung zwischen den Stellen E1 und E2 anhand der Neigung If des Lichtstrahls.

## Claims

1. Device for measuring the slope of a ground surface between two locations E1 and E2 spaced apart from one another, comprising two structurally distinct units intended to be placed on the ground, namely a first unit (100) comprising:
- a first base (10) extending in a plane P1, capable of resting on the ground at location E1,
- said first base being associated with a support carrying a measuring box (30), in which are fixedly mounted i) emission means for a light beam having an axis A through an opening (31) formed in the front wall of said box, and ii) an accelerometer (35) capable of generating an electrical signal proportional to its own inclination relative to a reference position Pr, and a second unit (200) comprising:
- a second base (20) extending in a plane P2, capable of resting on the ground at location E2,
- said second base supporting a target plate (21), one face of which is provided with a sight (22) located at a defined height H2 of said second base, said base and said target plate extending in planes substantially perpendicular to each other,
the measuring box (30) being mounted in an articulated manner on said support by junction means allowing the axis A to pivot about a point O located at a defined height H1 from the first base (10), in a plane Po orthogonal to the plane P1 up to an inclination If such that said light beam points towards the sight (22) when said two units are respectively placed at locations E1 and E2,
the accelerometer (35) being configured to undergo said pivoting and deliver an electrical signal representative of the inclination If of axis A relative to plane P1, said accelerometer being connected to signal processing and calculation means configured to provide a quantitative measurement of the slope between locations E1 and E2 based on the inclination If of the light beam,
said device being **characterized in that** said emission means comprise a laser diode pointer (32) capable of projecting through the opening (31) of the measuring box (30) a light beam whose diameter is less than 5 mm at a distance of 5 m.

2. Device according to claim *1, **characterized in that*** said means for connecting the measuring box (30) and the support for the first unit (100) have an axis of rotation R that intersects axis A at point O and is parallel to plane P1 of the first base (10), the height H1 of the axis of rotation R relative to the plane P1 of the first base (10) and the height H2 of the sight (22) relative to the plane P2 being identical.

3. Device according to one of the preceding claims, ***characterized in that*** the first base (10) and the support are formed of two metal plates (11, 12) connected perpendicularly to one another along one of their edges, the support plate (11) having a hole (49) suitable for cooperating with the junction means of the measuring box (30).

4. Device according to the previous claim, ***characterized in that*** the measuring box (30) comprises a hollow shell (33) with a flat bottom (38) parallel to the support plate (11) and a cover (34), the shell (33) and the cover (34) defining an elongated compartment along a longitudinal axis coinciding with axis A, the bottom (38) of the shell (33) comprising a rim (36) extending outwards along an axis coinciding with the axis of rotation R, in which means are provided for fixing the shell (33) of the measuring box (30) to the support plate (11), the free edge (37) of the rim (36) forming a bearing surface against the support plate (11).

5. Device according to the previous claim, ***characterized in that*** the fixing means comprise a screw (40) with a threaded shank (41) and a polygonal head (42), and a sleeve (43) coaxial with the rim (36), capable of receiving the threaded shank (41) of the screw (40), said sleeve having an orifice delimited by a circular rim (44) capable of bearing against the periphery of the hole (49) in the support plate (11), the threaded shank (41) of the screw (40) passing through said opening and said hole to receive a fixing nut (45) equipped with a locking element, and an internal opening leading into a housing (46) provided in the bottom (38) of the shell (33) capable of receiving the head (42) of said screw, said housing and said screw head having an identical polygonal cross-section.

6. Device according to claim 5, ***characterized in that*** the support plate (11) has a cut-out centred on the hole (49) receiving the means for connecting to the measuring box (30), said cut-out being bent to form a tab (50) extending above the base (10), in a plane parallel to the plane of the support plate (11), at a distance at least equal to the height of the fixing nut (45) of the measuring box (30).

7. Device according to any of the preceding claims, ***characterized in that*** the second base (20) and the target plate (21) of the second unit (200) are formed from two metal plates (22) connected to each other by one of their edges in a perpendicular orientation, said target plate comprising the sight (22) represented by a point or a continuous or discontinuous straight line.

8. Device according to the previous claim, ***characterized in that*** the sight (22) of the target plate (21) consists of a thin straight strip less than 5 mm wide, parallel to the plane P2 of the second base (20), produced by printing, engraving, perforation, or continuous or discontinuous recessing of the metal.

9. Device according to any of the preceding claims, ***characterized in that*** the first and second bases (10, 20) are coated on their underside with a layer (6) of a flexible material capable of deforming on contact with uneven ground or fragments of material.

10. Device according to any of the preceding claims, ***characterized in that*** it comprises a wireless electronic communication module (60) with a central processing unit (70), means for recording, means for storing and means for editing the measurement results, and an autonomous power supply (80).

11. System for controlling and assisting in adjusting the orientation of the lights of a vehicle whose wheels are resting on the floor of a workshop, with a front wheel resting on area Z1 and a rear wheel resting on area Z2, the system being ***characterized in that*** it comprises:
- a device for measuring the slope of the floor between two locations E1 and E2, according to one of the preceding claims,
- an apparatus (300) for controlling the orientation of the beam of lights emitted by a vehicle, capable of measuring the angle formed by the beam of lights with the plane of the ground,
- calculation means providing a quantitative measurement of the slope of the ground between locations E1 and E2, chosen so that they are adjacent to zones Z1 and Z2 respectively,
- calculation means providing a quantitative value for the angle of deflection of the beam of light based on the measurement of the angle of said beam with the ground corrected for the slope of the ground between E1 and E2,
- a central management unit (70) comprising means for exchanging data (71) between the headlight control device (300), the ground slope measuring device and said central unit, and means for recording and storing data.

12. Method for measuring the slope of a ground between two locations E1 and E2 distan from each other, ***characterized in that*** it comprises the steps of:
- placing the bases (10, 20) of the two units (100, 200) of a ground slope measuring device according to one of claims 1 to 10 at locations E1 and E2,
- rotating the measuring box (30) in a plane Po orthogonal to the plane P1 of the first base (10) until the light beam emitted by the emission means points towards the target (22),
- recording the electrical signal representative of the inclination If reached by the beam, which is provided by the accelerometer (35),
- calculating the slope between locations E1 and E2 from the inclination If of the light beam.
